# EUROPÄISCHE PATENTSCHRIFT

(11) **EP 3 599 130 B1**
(45) Veröffentlichungstag und Bekanntmachung des Hinweises auf die Patenterteilung: **28.07.2021**
(21) Anmeldenummer: 19000314.5
(22) Anmeldetag: 26.06.2019
(51) Int. Cl.: B60P 3/075

(54) **HAKENELEMENT UND SPANNGURT MIT HAKENELEMENTEN**
HOOK ELEMENT AND TENSIONING BELT WITH HOOK ELEMENTS
ÉLÉMENT DE CROCHET ET SANGLE DE SERRAGE POURVUE D'ÉLÉMENTS DE CROCHET

(30) Priorität: 27.07.2018 DE 102018005912
(43) Veröffentlichungstag der Anmeldung: 29.01.2020
(73) Patentinhaber: SpanSet GmbH & Co. KG, 52531 Übach-Palenberg (DE)
(72) Erfinder: Neunfinger, Hans-Josef, 52531 Geilenkirchen (DE); Glasen, Werner, 52134 Herzogenrath (DE)
(74) Vertreter: Kietzmann, Manfred

(56) Entgegenhaltungen:
- EP-A1- 3 238 990
- EP-B1- 2 291 299
- DE-U1-202017 001 981

## Beschreibung

Die Erfindung betrifft ein Hakenelement, einen Spanngurt mit solchen Hakenelementen sowie eine Anordnung eines Spanngurts mit solchen Hakenelementen.

Als nachteilig hat sich herausgestellt, dass bei einem Transport von Fahrzeugen, insbesondere Kraftfahrzeugen, verwendete Zurrmittel in Form von Spanngurten mit Ratsche und Hakenelementen zur Arretierung mindestens eines Rades eines Fahrzeugs nicht entsprechend der technischen Regeln eingesetzt werden. Es ist üblich, dass als Hakenelemente sowohl handelsübliche Einspitzhaken als auch Doppelspitzhaken in Lochbleche eines Fahrzeugaufbaus, eines Untergrundes, eingehängt werden. Dabei werden diese aber oftmals nicht im Hakengrund, sondern hauptsächlich auf ihrer Spitze belastet. Somit entstehen unerwünschte Punktbelastungen, welche zu Beschädigungen an Untergründen aus flächenhaften Gebilden mit Durchbrüchen, so Langlochblechen, führen, welche üblicherweise bei Fahrzeugaufbauten von Transportfahrzeugen für Fahrzeuge zum Einsatz kommen.

Gleichsam besteht dabei die Gefahr der Beschädigung der Hakenelemente. Um dies zu vermindern, werden zusätzlich zu Spitzhaken separate Knebel eingesetzt, in welche ein Spitzhaken eingehängt wird. Bei einem Einsatz von Knebeln ist eine Beschädigung von Untergründen wegen der zum Spitzhaken anders geformten Auflagefläche reduziert. Jedoch bedarf es weiterhin der Verwendung von Spitzhaken bei den vorbeschriebenen Spanngurten zum Transport von Fahrzeugen. Ferner besteht die Gefahr, dass die separaten Knebel verloren gehen, da sie nicht mit dem Zurrmittel unverlierbar verbunden sind.

Zudem besteht ein Nachteil darin, dass die separaten Knebel hinsichtlich ihrer Dimensionierung nicht stets auf alle Zurrmittel abgestimmt sind. Auch kann keine Qualitätssicherung und Nutzungsüberwachung zusammen mit dem Zurrmittel gewährleistet werden.

Ferner ist aus der DE 20 2017 001 981 U1 ein Hakenelement bekannt, dass sowohl einen Spitzhaken als auch einen Knebel vereint oder nur einen Knebel betrifft. Diese Vorrichtung ist jedoch aufwendig zu fertigen und daher kostenintensiv. Ein Knebel gewährt ferner nur eine eingeschränkte Nutzung, nämlich nur dann, wenn das Hakenelement mit einem Hakenschaft im Wesentlichen aufrecht in einem Lochblech angeordnet ist und eine Zugkraft rechtwinklig zu einer Auflagefläche des Knebels wirkt. Bei einer anderweitigen Anordnung, so an einer Ratsche oder einem Spanngurt, die horizontal zum Untergrund ausgerichtet sind, besteht die Gefahr des Herausgleitens des Knebels aus dem Durchbruch. Ferner haben Knebel den Nachteil, dass diese nicht in alle Durchbrüche ihrer Größe und Formgebung wegen eingeführt werden können, so zum Beispiel nur in Langlöcher und nicht in einfache radialsymmetrische Durchbrüche.

Die Aufgabe der Erfindung besteht demgemäß darin, ein Hakenelement für einen Spanngurt und einen Spanngurt zur Verfügung zu stellen, bei denen das Hakenelement die bisherigen Nachteile des Standes der Technik der bekannten Hakenelemente reduziert.

Die Aufgabe wird erfindungsgemäß gelöst durch ein Hakenelement gemäß den Merkmalen des Anspruchs 1, einen Spanngurt gemäß den Merkmalen des Anspruchs 9 und eine Anordnung eines Spanngurts mit den erfindungsgemäßen Hakenelementen gemäß Anspruch 10.

Danach weist das erfindungsgemäße Hakenelement zur Gewährung einer Arretierung eines Fahrzeugs und mithin mindestens eines Rades eines Fahrzeugs auf einem Untergrund aus einem flächenhaften Gebilde mit Durchbrüchen folgende Merkmale auf.

Das Hakenelement weist ein Hakenmaul mit Hakengrund und mit einer ersten Flanke und einer zweiten Flanke, welche ein freies Ende besitzt, und einen Hakenschaft mit einem Aufnahmeende auf. An dem Aufnahmeende ist eine Gurtaufnahme, so eine bekannte Gurtaufnahme in Form eines U-Profils mit einem Bolzen, der drehbar gelagert sein kann, angeordnet. Erfindungsgemäß ist das Hakenelement oberhalb des Hakengrundes im Bereich der ersten Flanke oder der zweiten Flanke oder mittig im Hakengrund beginnend um 90 Grad seitlich in Bezug zu dem Hakenschaft abgeknickt, im Sinne von abgebogen oder umgelegt, wobei der so gebildete umgelegte Bereich einen Auflageabschnitt bildet.

Der so gebildete Auflageabschnitt bildet eine Auflagefläche, die an einer Unterseite des Untergrunds anliegen kann, wenn das Hakenelement in einen der Durchbrüche des Untergrunds eingeführt ist und der Hakenschaft des Hakenelementes im Wesentlichen aufrecht, so im Wesentlichen vertikal, zum Untergrund angeordnet ist. Die Auflageflache gewährt eine bessere Kraftableitung und verhindert eine Punktbelastung des Untergrunds, wie dies bei der bisherigen typischen Anordnung herkömmlicher Hakenelemente in Form von Spitzhaken erfolgt, bei denen bei einer derartigen im Wesentlichen aufrechten Anordnung der Untergrund stark punktuell durch alleinige Anlage der Hakenspitze belastet und sogar deformiert wird.

In einer weiteren Ausgestaltung ist der Hakenschaft oder zumindest ein Bereich des Hakenschaftes, beispielhaft über dem Hakengrund beginnend, in Richtung des freien Endes der zweiten Flanke des Hakens versetzt. Das bedeutet, dass er gekröpft ist. Ferner ist der Hakenschaft axial in Richtung des Hakenmauls verdreht, was je nach Geometrie des Hakens erfolgt und beispielhaft um 15 bis 30 Grad erfolgen kann. Dies gewährt eine gleichmäßigere Kraftverteilung bei einem funktionsgemäßen Einsatz des Hakenelements, da durch den Auflageabschnitt die Hakengeometrie verändert wird. Es soll eine im Wesentlichen symmetrische Ableitung von Kräften bei Zugbeanspruchung sichergestellt werden. Der Hakenschaft kann auch bereits die erste Flanke einschließen, die im Sinne der Erfindung in diesem Fall auch Teil des Hakenschaftes ist. Die konkrete Ausgestaltung hängt jeweils von den Umgebungsbedingungen des Untergrunds und dem Anforderungsprofil des Hakenelements ab. Sicherzustellen ist bei dieser Ausgestaltung lediglich eine im Wesentlichen gleichmäßige Kraftverteilung bei einem funktionsgemäßen Einsatz des Hakenelements.

Ferner kann vorgesehen werden, dass das Hakenelement im Hakengrund eine Erhebung, so beispielhaft eine wulstartige Ausformung besitzt, wobei die Erhebung in einen Hakenmaulinnenraum hineinragt. Ist die Erhebung als wulstartige Ausformung ausgestaltet, so erstreckt sich diese im Wesentlichen quer zum Hakenelement, zu seinen Seiten und somit im Wesentlichen quer zur axialen Erstreckung des Hakenelements zylinderförmig. Die Erhebung gewährt eine weiter verbesserte Fixierung des Hakenelements, wenn das Hakenelement in einem der Durchbrüche des Untergrunds eingeführt ist und der Hakenschaft des Hakenelements in einem spitzen Winkel, im Wesentlichen horizontal zu dem Untergrund angeordnet ist und der Haken funktionsgemäß einer Zugbeanspruchung ausgesetzt ist. Die Erhebung beziehungsweise die wulstartige Ausformung verringert weiter die Gefahr eines unkontrollierten Herausgleitens des Hakens aus einem Durchbruch des Untergrunds.

Darüber hinaus kann in einer weiteren Ausgestaltung des Hakenelements vorgesehen sein, dass das freie Ende des Hakenelements und damit im Wesentlichen auch der Auflageabschnitt einen linearen Endabschnitt aufweist oder der Endabschnitt einen Radius aufweist, also radial ausgestaltet ist. Ein linearer Endabschnitt erleichtert eine Entnahme des Hakenelements aus einem Durchbruch. Ist dagegen der Endabschnitt radial gestaltet, wird ein nicht vorgesehenes Lösen des Hakenelements aus einem der Durchbrüche des Untergrunds weiter erschwert. Ein Herausgleiten wird auch dadurch erschwert, dass das freie Ende der zweiten Flanke bei funktionsgemäßer Anordnung an einem der Durchbrüche des Untergrunds stirnseitig an einer Unterseite des Untergrunds anliegen oder anstoßen kann, wenn der Hakenschaft des Hakenelements in einem spitzen Winkel zum Untergrund angeordnet ist. Dies fördert eine sichere Arretierung.

Ferner ist vorgesehen, dass das Hakenelement ausgenommen die Gurtaufnahme einen radialsymmetrischen Querschnitt aufweist. Es lässt sich so besonders gut in Rundlöcher einführen. Wird das Hakenelement, ausgenommen die Gurtaufnahme, aus einem Rundstahlabschnitt gebildet, so ist die Herstellung beispielhaft mithilfe eines Biegewerkzeugs möglich. Die Fertigung ist zwar kostenintensiver als bei den herkömmlichen Spitzhaken, jedoch günstiger als bei Hakenelementen mit einem Knebel.

Weiterhin beansprucht die Erfindung ein Zurrmittel, nämlich einen Spanngurt mit einer Ratsche und den erfindungsgemäßen Halteelementen zu Arretierung eines Fahrzeugs auf Untergründen aus flächenhaften Gebilden mit Durchbrüchen, so zum Beispiel Lochblechen, welche eine Fixierung von Fahrzeugen gewähren, zum Beispiel durch Arretierung mindestens eines ihrer Räder oder anderer Bauteile.

Dabei handelt es sich um den Einsatz des erfindungsgemäßen Hakenelements an bereits bekannten Zurrmitteln anstelle der bisherigen Spitzhaken, sodass von der Beschreibung der konkreten Anordnung abgesehen wird. Die Anordnung orientiert sich an den bekannten Vorrichtungen.

Der vorbeschriebene Spanngurt mit einer Ratsche und den erfindungsgemäßen Hakenelementen anstelle der bekannten Spitzhaken zur Fixierung mindestens eines Rades eines Fahrzeugs, insbesondere eines Kraftfahrzeugs, so beispielhaft mindestens eines Rades des Fahrzeugs auf einem Untergrund aus einem flächenhaften Gebilde mit Durchbrüchen, wie Langlöchern, Rundlöchern oder sonstigen Öffnungen, ist dabei wie folgt funktionsgemäß angeordnet. Die Anordnung erfolgt wie folgt.

Bei einem an einem freien Ende des Spanngurts angeordneten erfindungsgemäßen Hakenelement wird Selbiges in einen Durchbruch eines Untergrunds bei einer Lauffläche eines Reifens des mindestens einen Rades eingeführt, sodass der Auflageabschnitt des Hakenelements an den am Durchbruch angrenzenden Flächen des Untergrunds anliegt. Sodann wird der Spanngurt über das mindestens eine Rad, und zwar über seine Lauffläche gelegt. Danach wird ein mittleres weiteres erfindungsgemäßes Hakenelement in einen weiteren Durchbruch des Untergrunds an einer gegenüberliegenden Seite des Rades bei seiner Lauffläche in den weiteren Durchbruch des Untergrunds eingeführt, sodass dieses ebenfalls an dem weiteren Durchbruch, so an den am weiteren Durchbruch angrenzenden Flächen des Untergrunds anliegt. Bei einem an einem weiteren freien Ende des Spanngurts an der Ratsche anschließend angeordneten dritten Hakenelement handelt es sich um ein drittes erfindungsgemäßes Hakenelement, das in einen dritten Durchbruch des Untergrunds eingreift, wobei das Hakenelement an dem Bereich des Hakenmauls an dem Durchbruch des Untergrunds sicher angreift, der nicht der Auflageabschnitt ist. Der verbliebene Bereich des Hakenmauls, der nicht der Auflageabschnitt ist, gewährt dies noch. Durch den gekröpften und axial in Richtung des Hakenmauls gedrehten Hakenschaft kann das Hakenelement je nach konkreter Ausgestaltung des Hakenschafts sogar am Untergrund anliegen und sich so abstützen.

Unter Kfz-Transportvorrichtung ist jedwede Vorrichtung zu verstehen, die zum Transport von Kraftfahrzeugen oder sonstigen mit Rädern versehenen Fahrzeugen oder Vorrichtungen geeignet ist. Fahrzeuge im Sinne der Erfindung sind alle selbst angetriebenen oder fremd getriebenen Fahrzeuge, wie beispielhaft Anhänger oder sonstige Wagen oder fahrbare Vorrichtungen.

Unter Untergrund im Sinne der Erfindung ist jeder Untergrund aus einem flächenhaften Gebilde mit Durchbrüchen zu verstehen, in dem Hakenelemente, so die bekannten Spitzhaken, als auch das erfindungsgemäße Hakenelement an- beziehungsweise durchgreifen kann. Darunter fallen beispielhaft Lochbleche der Kfz-Transportvorrichtungen.

Das erfindungsgemäße Hakenelement gewährleistet, dass die Gefahr eines Aufbiegens des Untergrunds, wie dies bei herkömmlichen Spitzhaken geschehen konnte, reduziert ist. Das Hakenelement ist darüber hinaus relativ kostengünstig herstellbar. Aufgrund seiner Formgebung ist es sowohl in Langlöcher, als auch in radialsymmetrische Durchbrüche, also einfache Rundlöcher, gleichermaßen einführbar, was bei den bekannten Knebeln und ähnlich geformten Hakenelementen nicht möglich ist. Das erfindungsgemäße Hakenelement ist ebenfalls bei unterschiedlicher Ausrichtung von Zugkräften bei einem Einsatz an Zurrmitteln nutzbar. Es kann somit universeller als ein knebelförmiges Hakenelement oder sonstige ähnlich geformte Hakenelemente eingesetzt werden.

Die Erfindung wird nachfolgend anhand eines Ausführungsbeispiels unter Bezugnahme auf die Figuren weiter erläutert. Dabei ergeben sich weitere Vorteile, Merkmale und Ausgestaltungen der Erfindung.

Es zeigen:
**Fig. 1** ein erfindungsgemäßes Hakenelement mit bekannter Gurtaufnahme, aber ohne Bolzen der Gurtaufnahme,
**Fig. 2** eine Anordnung des erfindungsgemäßen Hakenelements an einem Untergrund,
**Fig. 3** bis **Fig. 3b** eine weitere Ausgestaltung des erfindungsgemäßen Hakenelements,
**Fig. 4** eine modifizierte Ausgestaltung des erfindungsgemäßen Hakenelements,
**Fig. 5** eine Anordnung eines Spanngurts an dem Untergrund mittels mehrerer Hakenelemente.
**Fig. 6** ein erfindungsgemäßes Hakenelement ohne Gurtaufnahme in einer Draufsicht

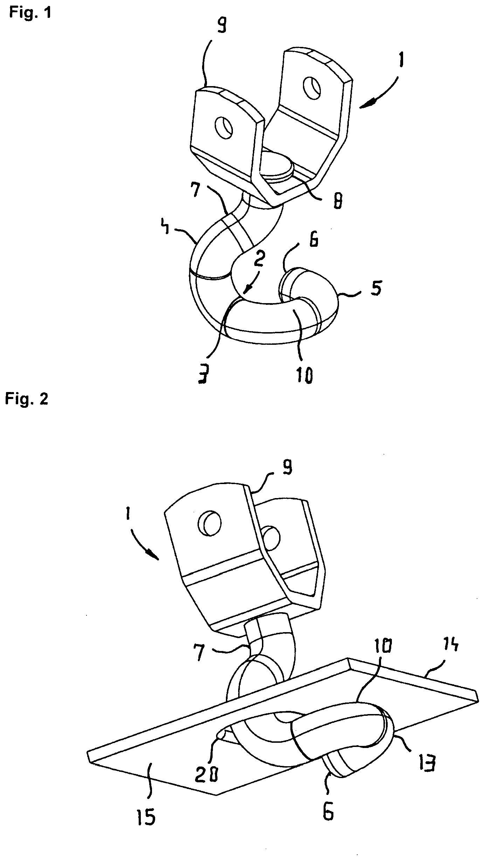

Gemäß **Fig. 1** weist das Hakenelement **1** ein Hakenmaul **2** mit einem Hakengrund **3** und mit einer ersten Flanke **4** und einer zweiten Flanke **5,** welche ein freies Ende **6** besitzt, und einen Hakenschaft **7** mit einem Aufnahmeende **8** auf. An dem Aufnahmeende **8** ist eine Gurtaufnahme **9,** eine bekannte Gurtaufnahme in Form eines U-Profils mit einem Bolzen, der drehbar gelagert ist, angeordnet. Der Bolzen ist in allen Figuren aus Gründen der Übersichtlichkeit nicht dargestellt. Das Hakenelement **1** ist mittig im Hakengrund **3** beginnend um 90 Grad seitlich in Bezug zu dem Hakenschaft **7** abgeknickt, also abgebogen beziehungsweise umgelegt, wobei der so gebildete umgelegte Bereich einen Auflageabschnitt **10** bildet.

Der so gebildete Auflageabschnitt **10** bildet eine Auflagefläche, die an einer Unterseite **15** des Untergrunds **14** anliegen kann, wenn das Hakenelement **1** in einen Durchbruch **20** des Untergrunds eingeführt ist und dabei der Hakenschaft **7** des Hakenelements **1** im Wesentlichen aufrecht, so im Wesentlichen vertikal, in Bezug zum Untergrund **14** angeordnet ist, so wie dies in **Fig. 2** dargestellt ist. Der Auflageabschnitt **10** weist einen radialen Endabschnitt **13** auf. Er ist halbkreisförmig gebogen.

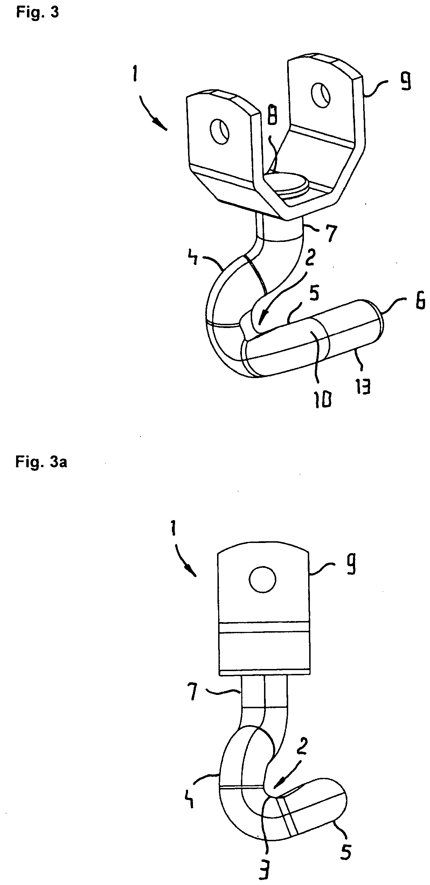

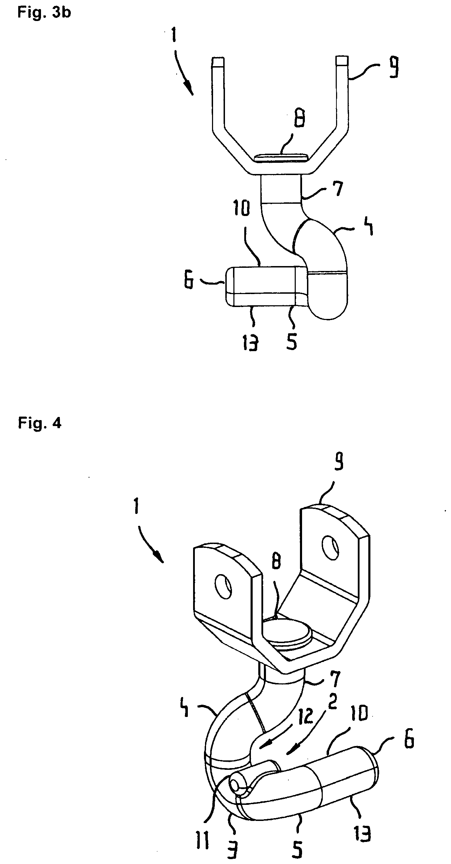

In den **Fig. 3, 3a****,** **3b** und **4** ist das Hakenelement **1** oberhalb des Hakengrunds **3** im Bereich der zweiten Flanke **5** um 90 Grad seitlich in Bezug zu dem Hakenschaft **7** abgebogen beziehungsweise umgelegt, wobei der so gebildete umgelegte Bereich einen Auflageabschnitt **10** mit einem linearen Endabschnitt **13** bildet. Die **Fig. 3, 3a** und **3b** stellen eine Ausführungsform des erfindungsgemäßen Hakenelements **1** in jeweils verschiedenen Ansichten dar.

In **Fig. 4****.** weist das Hakenelement **1** ergänzend zu der Ausgestaltung des Hakenelements **1** gemäß der **Fig. 3, 3a** und **3b** darüber hinaus zusätzlich eine Erhebung **11** in Form einer wulstartige Ausformung auf.

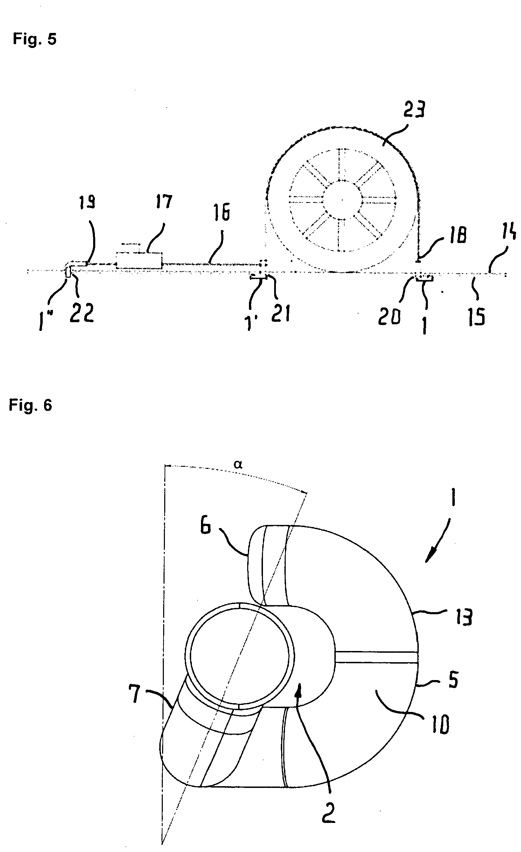

Bei allen Hakenelementen **1** gemäß der **Fig. 1** bis **4** ist ferner der Hakenschaft **7** in Richtung des freien Endes **6** der zweiten Flanke **5** des Hakenelements **1** versetzt. Der Hakenschaft **7** ist gekröpft und axial in Richtung des Hakenmauls **2** verdreht, was im Ausführungsbeispiel um einen Winkel α von 21 Grad erfolgt und in **Fig. 6** exemplarisch dargestellt ist, wobei in **Fig. 6** aus Gründen der Übersichtlichkeit die Gurtaufnahme **9** entfallen ist. Die erste Flanke **4** ist dabei Teil des Hakenschafts **7.** Dies gewährt, wie vorab dargestellt, eine gleichmäßigere Kraftverteilung bei einem funktionsmäßigen Einsatz des Hakenelements **1.**

**Fig 5****.** stellt die bereits beschriebene funktionsgemäße Anordnung eines Spanngurts **16** an einem Rad **23** mit drei erfindungsgemäßen Hakenelementen **1, 1'** und **1"** an dem Untergrund **14** mit dem Durchbruch **20,** einem weiteren Durchbruch **21** und einem dritten Durchbruch **22** dar.

Bei einem an einem freien Ende **18** des Spanngurts **16** angeordneten erfindungsgemäßen Hakenelements **1** ist Selbiges in einen Durchbruch **20** des Untergrunds **14** bei einer Lauffläche eines Reifens eines Rades **23** eingeführt, sodass der Auflageabschnitt **10** des Hakenelements **1** an den am Durchbruch **20** angrenzenden Flächen des Untergrunds **14** anliegt. Sodann ist der Spanngurt **16** über das Rad **23,** und zwar über seine Lauffläche gelegt. Danach ist ein mittleres weiteres erfindungsgemäßes Hakenelement **1'** in einen weiteren Durchbruch **21** des Untergrunds **14** an einer gegenüberliegenden Seite des Rades **23** bei seiner Lauffläche in den weiteren Durchbruch **21** des Untergrunds **14** eingeführt, sodass dieses Hakenelement **1',** so der Auflageabschnitt **10',** ebenfalls an den weiteren Durchbruch **21,** so an den am weiteren Durchbruch **21** angrenzenden Flächen des Untergrunds **14,** anliegt. Bei einem an einem weiteren freien Ende **19** des Spanngurts **16** an der Ratsche **17** anschließend angeordneten dritten Hakenelement **1"** handelt es sich um ein drittes erfindungsgemäßes Hakenelement **1",** das in einen dritten Durchbruch **22** des Untergrunds **14** eingreift, wobei das Hakenelement **1"** an dem Bereich des Hakenmauls **2** an dem dritten Durchbruch **22** des Untergrunds **14** sicher angreift, der nicht der Auflageabschnitt **10** ist. Der verbliebene Bereich des Hakenmauls **2,** der nicht der Auflageabschnitt **10** ist, gewährt dies noch. Durch den gekröpften und axial in Richtung des Hakenmauls **2** gedrehten Hakenschaft **7** kann das Hakenelement **1"** sogar am Untergrund **14** aufliegen und sich so abstützen.

Der so geschaffene erfindungsgemäße Spanngurt **16** mit Ratsche **17** und den erfindungsgemäßen Hakenelementen **1, 1'** und **1"** gewährt eine sichere Arretierung eines Rades **23** eines Fahrzeugs an einem Untergrund **14,** im Ausführungsbeispiel an dafür vorgesehenen Lochblechen eines Kfz-Transporters, wobei ein Aufbiegen des Untergrunds **14** im Bereich des Durchbruchs **20,** des weiteren Durchbruchs **21** und des dritten Durchbruchs **23** nachhaltig verringert ist. Ferner kann der gesamte Spanngurt **16** mit den erfindungsgemäßen Hakenelementen **1, 1'** und **1"** ausgestaltet sein. Es bedarf keiner Differenzierung zwischen unterschiedlichen Hakenelementen, was eine Fertigung grundsätzlich vereinfacht.

### Bezugszeichenliste:

- 1.: Hakenelement
- 2.: Hakenmaul
- 3.: Hakengrund
- 4.: erste Flanke
- 5.: zweite Flanke
- 6.: freies Ende
- 7.: Hakenschaft
- 8.: Aufnahmeende
- 9.: Gurtaufnahme
- 10.: Auflageabschnitt
- 11.: Wulstartige Ausformung
- 12.: Hakenmaulinnenraum
- 13.: Endabschnitt
- 14.: Untergrund
- 15.: Unterseite
- 16.: Spanngurt
- 17.: Ratsche
- 18.: freies Ende des Spanngurts
- 19.: weiteres freies Ende des Spanngurts
- 20.: Durchbruch
- 21.: weiterer Durchbruch
- 22.: dritter Durchbruch
- 23.: Rad

## Patentansprüche

1. Hakenelement (1) zur Gewährung der Arretierung mindestens eines Rades (23) eines Fahrzeugs auf einem Untergrund (14) aus einem flächenhaften Gebilde mit Durchbrüchen (12), (13), (14), wobei das Hakenelement (1) ein Hakenmaul (2) mit Hakengrund (3) und mit einer ersten Flanke (4) und einer zweiten Flanke (5), welche ein freies Ende (6) besitzt, und einen Hakenschaft (7) mit einem Aufnahmeende (8) aufweist, an dem Aufnahmeende (9) eine Gurtaufnahme(9) angeordnet ist, **dadurch gekennzeichnet, dass**
das Hakenelement (1) oberhalb des Hakengrunds (3) im Bereich der ersten Flanke (4) oder der zweiten Flanke (5) oder mittig im Hakengrund (3) beginnend um 90 Grad seitlich in Bezug zu dem Hakenschaft (7) abgeknickt ist und der umgelegte Bereich einen Auflageabschnitt (10) bildet.

2. Hakenelement (1) nach Anspruch 1, wobei der Hakenschaft (7) oder ein Bereich des Hakenschaftes (7) in Richtung des freien Endes (6) versetzt ist und der Hakenschaft (7) axial in Richtung des Hakenmauls (2) verdreht ist.

3. Hakenelement (1) nach Anspruch 2, wobei der Hakenschaft (7) axial in Richtung des Hakenmauls (2) um einen Winkel α von 15 bis 30 Grad verdreht ist.

4. Hakenelement (1) nach einem der vorherigen Ansprüche, wobei der Auflageabschnitt (1) eine Auflagefläche bildet, die an einer Unterseite (15) des Untergrunds (14) anliegen kann, wenn das Hakenelement (1) in einen der Durchbrüche (12), (13), (14) des Untergrunds (14) eingeführt ist und der Hakenschaft (7) des Hakenelements (1) im Wesentlichen aufrecht zum Untergrund (14) angeordnet ist.

5. Hakenelement (1) nach einem der vorherigen Ansprüche, wobei das Hakenelement (1) im Hakengrund (3) eine Erhebung (11) aufweist, die in einen Hakenmaulinnenraum (12) hineinragt.

6. Hakenelement (1) nach einem der vorherigen Ansprüche, wobei das freie Ende (6) des Hakenelements (1) einen linearen Endabschnitt (13) aufweist oder der Endabschnitt (13) einen Radius aufweist.

7. Hakenelement (1) nach einem der vorherigen Ansprüche, wobei das Hakenelement (1) ausgenommen der Gurtaufnahme (9) einen radialsymmetrischen Querschnitt aufweist.

8. Hakenelement (1) nach einem der vorherigen Ansprüche, wobei das Hakenelement (1) ausgenommen der Gurtaufnahme (9) durch einen Rundstahlabschnitt gebildet wird.

9. Spanngurt (16) mit einer Ratsche (17) und Hakenelementen (1), (1') und (1") zur Arretierung eines Rades (23) eines Fahrzeugs auf einem Untergrund (14) aus einem flächenhaften Gebilde mit Durchbrüchen (12), (13), (14), wobei die Hakenelemente (1), (1') und (1'') gemäß einer der Ansprüche 1 bis 8 ausgestaltet sind.

10. Anordnung eines Spanngurts (16) mit einer Ratsche (17) und Hakenelementen (1), (1') und (1") ausgestaltet gemäß einem oder mehrerer Ansprüche 1 bis 8 zur Arretierung eines Rades (23) eines Fahrzeugs auf einem Untergrund (14) aus einem flächenhaften Gebilde mit Durchbrüchen (12), (13), (14), wobei bei einem an einem freien Ende (18) des Spanngurts (16) angeordneten erfindungsgemäßen Hakenelement (1) Selbiges in einen Durchbruch (20) des Untergrunds (14) bei einer Lauffläche eines Reifens eines Rades (23) eingeführt ist, sodass der Auflageabschnitt (10) des Hakenelements (1) an den am Durchbruch (20) angrenzenden Flächen des Untergrunds (14) anliegt, sodann der Spanngurt (16) über das Rad (23), und zwar über seine Lauffläche gelegt ist, danach ein mittleres weiteres erfindungsgemäßes Hakenelement (1') in einen weiteren Durchbruch (21) des Untergrunds (14) an einer gegenüberliegenden Seite des Rades (23) bei seiner Lauffläche in den weiteren Durchbruch (21) des Untergrunds (14) eingeführt ist, sodass dieses Hakenelement (1'), so der Auflageabschnitt (10'), ebenfalls an den weiteren Durchbruch (21), so an den am weiteren Durchbruch (21) angrenzenden Flächen des Untergrunds (14), anliegt, das bei einem an einem weiteren freien Ende (19) des Spanngurts (16) an der Ratsche (17) anschließend angeordnete dritte Hakenelement (1") in einen dritten Durchbruch (22) des Untergrunds (14) eingreift, wobei das Hakenelement (1") an dem Bereich des Hakenmauls (2) an dem dritten Durchbruch (22) des Untergrunds (14) sicher angreift, der nicht der Auflageabschnitt (10) ist.

## Claims

1. A hook element (1) for ensuring the locking of at least one wheel (23) of a vehicle on a ground (14) made of a planar structure with openings (12), (13), (14), wherein the hook element (1) has a hook mouth (2) with a hook base (3) and with a first side (4) and a second side (5), which has a free end (6), and a hook shaft (7) with a receiving end (8), at which receiving end (8) a belt receiver (9) is arranged, **characterized in that**
the hook element (1) is bent above the hook base (3) in the region of the first side (4) or of the second side (5) or centrally in the hook base (3) starting at 90 degrees laterally relative to the hook shaft (7) and the folded region forms a resting portion (10).

2. The hook element (1) according to Claim 1, wherein the hook shaft (7) or a region of the hook shaft (7) is offset in the direction of the free end (6) and the hook shaft (7) is rotated in the direction of the hook mouth (2).

3. The hook element (1) according to Claim 2, wherein the hook shaft (7) is rotated axially in the direction of the hook mouth (2) by an angle α of 15 to 30 degrees.

4. The hook element (1) according to any one of the preceding claims, wherein the resting portion (10) forms a resting surface which can rest on a bottom side (15) of the ground (14) when the hook element (1) is inserted into one of the openings (12), (13), (14) of the ground (14) and the hook shaft (7) of the hook element (1) is arranged substantially upright relative to the ground (14).

5. The hook element (1) according to any one of the preceding claims, wherein the hook element (1) has an elevation (11) in the hook base (3) which protrudes into a hook mouth interior (12).

6. The hook element (1) according to any one of the preceding claims, wherein the free end (6) of the hook element (1) has a linear end portion (13) or the end portion (13) has a radius.

7. The hook element (1) according to any one of the preceding claims, wherein the hook element (1), except for the belt receiver (9), has a radially symmetrical cross-section.

8. The hook element (1) according to any one of the preceding claims, wherein the hook element (1), except for the belt receiver (9), is formed by a round steel portion.

9. A tensioning belt (16) with a ratchet (17) and hook elements (1), (1') and (1") for locking a wheel (23) of a vehicle on a ground (14) made of a planar structure with openings (12), (13), (14), wherein the hook elements (1), (1') and (1") are configured according to any one of Claims 1 to 8.

10. An arrangement of a tensioning belt (16) with a ratchet (17) and hook elements (1), (1') and (1"), designed according to one or several of Claims 1 to 8 for locking a wheel (23) of a vehicle on a ground (14) made of a planar structure with openings (12), (13), (14),
wherein, for a hook element (1) according to the invention arranged at a free end (18) of the tensioning belt (16), said hook element is inserted into an opening (20) of the ground (14) for a bearing surface of a tire of the wheel (23), such that the resting portion (10) of the hook element (1) rests on the surfaces of the ground (14) which abut the opening (20) so that the tensioning belt (16) lies over the wheel (23), specifically over its bearing surface, then a central further hook element (1') according to the invention is inserted into a further opening (21) of the ground (14) at an opposing side of the wheel (23) at its bearing surface in the further opening (21) of the ground (14), such that this hook element (1'), specifically the resting portion (10'), also rests on the further opening (21), specifically on the surfaces of the ground (14) which abut the further opening (21), so that a third hook element (1"), which is subsequently arranged at a further free end (19) of the tensioning belt (16) at the ratchet (17), engages in a third opening (22) of the ground (14),
wherein, in the region of the hook mouth (2), the hook element (1") securely engages with the third opening (22) of the ground (14) which is not the resting portion (10).

## Revendications

1. Élément de crochet (1) destiné à garantir le blocage d'au moins une roue (23) d'un véhicule sur un support (14) constitué d'une structure plane avec des passages (12), (13), (14), dans lequel l'élément de crochet (1) présente un bec de crochet (2) avec un siège de crochet (3) et avec un premier flanc (4) et un second flanc (5), lequel possède une extrémité libre (6), et une tige de crochet (7) avec une extrémité de réception (8), un logement de sangle (9) est disposé à l'extrémité de réception (8), **caractérisé en ce que**
l'élément de crochet (1) est désaxé de 90 degrés latéralement par rapport à la tige de crochet (7) au-dessus du siège de crochet (3) dans la zone du premier flanc (4) ou du second flanc (5) ou commençant au milieu du siège de crochet (3) et la zone rabattue forme un tronçon d'appui (10).

2. Élément de crochet (1) selon la revendication 1, dans lequel la tige de crochet (7) ou une zone de la tige de crochet (7) est décalée en direction de l'extrémité libre (6) et la tige de crochet (7) est déviée axialement en direction du bec de crochet (2).

3. Élément de crochet (1) selon la revendication 2, dans lequel la tige de crochet (7) est déviée axialement en direction du bec de crochet (2) d'un angle α de 15 à 30 degrés.

4. Élément de crochet (1) selon l'une des revendications précédentes, dans lequel le tronçon d'appui (10) forme une surface d'appui, qui peut reposer sur le dessous (15) du support (14), lorsque l'élément de crochet (1) est introduit dans l'un passages (12), (13), (14) du support (14) et la tige de crochet (7) de l'élément de crochet (1) est disposée sensiblement à la verticale par rapport au support (14).

5. Élément de crochet (1) selon l'une des revendications précédentes, dans lequel l'élément de crochet (1) présente une protubérance (11) dans le siège de crochet (3), qui dépasse à l'intérieur du bec de crochet (12).

6. Élément de crochet (1) selon l'une des revendications précédentes, dans lequel l'extrémité libre (6) de l'élément de crochet (1) présente un tronçon terminal linéaire (13) ou le tronçon terminal (13) présente un rayon.

7. Élément de crochet (1) selon l'une des revendications précédentes, dans lequel de l'élément de crochet (1) à l'exception du logement de sangle (9) présente une section transversale à symétrie radiale.

8. Élément de crochet (1) selon l'une des revendications précédentes, dans lequel l'élément de crochet (1) à l'exception du logement de sangle (9) est formé par un tronçon en acier rond.

9. Sangle de serrage (16) avec un cliquet (17) et des éléments de crochet (1), (1') et (1") destinés au blocage d'une roue (23) d'un véhicule sur un support (14) constitué d'une structure plane avec des passages (12), (13), (14), dans laquelle les éléments de crochet (1), (1') et (1") sont conçus selon l'une des revendications 1 à 8.

10. Agencement d'une sangle de serrage (16) avec un cliquet (17) et des éléments de crochet (1), (1') et (1") conçus selon l'une ou plusieurs revendications 1 à 8 pour bloquer une roue (23) d'un véhicule sur un support (14) constitué d'une structure plane avec des passages (12), (13), (14),
dans lequel en présence d'un élément de crochet (1) selon l'invention disposé à une extrémité libre (18) de la sangle de serrage (16), un même élément de crochet est introduit dans un passage (20) du support (14) près d'une surface de roulement d'un pneu d'une roue (23), si bien que le tronçon d'appui (10) de l'élément de crochet (1) repose sur les surfaces du support (14) adjacentes au passage (20), si bien que la sangle de serrage (16) est posée par le biais de la roue (23), et ce par le biais de sa surface de roulement, ensuite un autre élément de crochet central (1') selon l'invention est introduit dans un autre passage (21) du support (14) du côté opposé de la roue (23) près de sa surface de roulement dans l'autre passage (21) du support (14), si bien que cet élément de crochet (1'), donc le tronçon d'appui (10'), repose également sur l'autre passage (21), donc sur les surfaces du support (14) adjacentes à l'autre passage (21), le troisième élément de crochet (1") disposé ultérieurement sur le cliquet (17) à une autre extrémité libre (19) de la sangle de serrage (16) s'engage dans un troisième passage (22) du support (14),
dans lequel l'élément de crochet (1 ") s'accroche en toute sécurité au troisième passage (22) du support (14) au niveau de la zone du bec de crochet (2), qui n'est pas le tronçon d'appui (10).
